(19) Europäisches Patentamt
European Patent Office
Office européen des brevets

(11) **EP 3 457 596 B1**

(12) **EUROPEAN PATENT SPECIFICATION**

(45) Date of publication and mention
of the grant of the patent:
**15.04.2020   Bulletin 2020/16**

(51) Int Cl.:
*H04B 10/272* $^{(2013.01)}$          *H04J 3/06* $^{(2006.01)}$
*H04Q 11/00* $^{(2006.01)}$

(21) Application number: **17191445.0**

(22) Date of filing: **15.09.2017**

(54) **METHODS AND PRODUCTS FOR ONU START UP PROCEDURE**

VERFAHREN UND PRODUKTE ZUM ONU-INBETRIEBNAHMEVERFAHREN

PROCÉDÉS ET PRODUITS POUR PROCÉDURE DE DÉMARRAGE D'ONU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.03.2019   Bulletin 2019/12**

(73) Proprietor: **Nokia Solutions and Networks Oy
02610 Espoo (FI)**

(72) Inventors:
• **BONK, Rene
70435 Stuttgart (DE)**
• **Pöhlmann, Wolfgang
70435 Stuttgart (DE)**
• **Borkowski, Robert
70435 Stuttgart (DE)**

(74) Representative: **Louis Pöhlau Lohrentz
Patentanwälte
Postfach 30 55
90014 Nürnberg (DE)**

(56) References cited:
**US-A1- 2011 280 578     US-A1- 2015 043 913
US-B1- 6 647 210**

• **WONG E ET AL: "Passive Optical Network
Architectures with Optical Loopbacks", LEOS,
2005 IEEE ANNUAL MEETING CONFERENCE
PROCEEDINGS SYDNEY, AUSTRALIA 23-27
OCT. 2005, PISCATAWAY, NJ, USA,IEEE,
PISCATAWAY, NJ, USA, 23 October 2005
(2005-10-23), pages 218-219, XP010886508, DOI:
10.1109/LEOS.2005.1547957 ISBN:
978-0-7803-9217-5**

## Description

### Field of the invention

The invention relates to communication technology, in particular to an optical communication network.

### Background

In a typical Passive Optical Network (PON) scenario a new Optical Network Unit (ONU) is registered in the network during a ranging process, which involves halting the upstream traffic in the entire PON (so-called quiet window) in order to measure the roundtrip delay (RTD) to a new ONU. This is followed by the optical line terminal (OLT) sending instructions to the new ONU to adjust its transmission delay (equalization delay) in order to synchronize in time the new ONU to already registered ONUs, and hence avoid collision at the OLT receiver between bursts originating from the new and previously registered ONUs when normal traffic is resumed. The quiet window needs to be periodically repeated in order to discover newly attached ONUs.

In ITU-T PONs (XG(S)-PON or NG-PON2), the ranging protocol requires quiet windows of 250 $\mu$s (multiple of the 125 $\mu$s frame duration, dependent on the maximum supported fiber distance). During this window, only unregistered ONUs are allowed to transmit their serial numbers to OLT, and in turn OLT assigns them ONU IDs. Subsequently, further quiet windows are used to measure the RTD to each new ONU, one at a time, and calculate their equalization delay, i.e., a time by which the transmission from this ONU has to be delayed in order to synchronize it with the other ONUs.

Existence of quiet windows requires that the upstream traffic must be buffered for the said period, and hence periodically introduces significant latency into the upstream data transmission. This is an adequate solution for scenarios involving dynamic bandwidth allocation (DBA) with unpredictable traffic, such as non-latency critical residential users. However, for constant throughput scenarios with fixed bandwidth allocation (with DBA turned off) buffering is unacceptable as the amount of the buffered data would grow infinitely with time. Moreover, certain applications such as mobile fronthauling, require very low latency connections (e.g., 5G target of 1 ms end-to-end latency for vehicular applications), for which long traffic interruptions can prevent reaching the latency goal.

An object of the invention is to develop a method for ONU ranging, where quiet windows do not have to be used.

### Summary of the Invention

The object of the invention is achieved by the method and apparatus in the claims.

According to one aspect of the invention, there is provided a method in a first network node, of assisting a first Optical Network Unit, ONU, starting up a communication with an Optical Line Terminal, OLT, the first network node being communicatively coupled to the OLT, the first ONU that is not yet in operation and a first number of ONUs that are already in operation, the first number being a natural number, each of the first number of ONUs being assigned to a time interval within an upstream frame to transmit an upstream burst to the OLT, at least one predetermined time slot in the upstream frame being not assigned to any of the first number of ONUs; the method comprising: a) receiving an upstream optical signal comprising burst signals transmitted by the first number of ONUs in response to a downstream frame respectively on the time interval assigned to them; b) providing the upstream optical signal to the first ONU that is not yet in operation.

In a preferred embodiment, the first network node is a power splitter.

In a preferred embodiment, the optical network comprises a plurality of cascaded power splitters, the first network node is the power splitter located closest to the OLT in terms of physical fiber distance.

According to another aspect of the present invention, there is provided a method in a first Optical Network Unit, ONU, of starting up a communication with an Optical Line Terminal, OLT, the OLT being communicatively coupled to the first ONU, and a first number of ONUs that are already in operation, the first number being a natural number, each of the first number of ONUs being assigned to a time interval within an upstream frame to transmit an upstream burst to the OLT, at least one predetermined time slot in the upstream frame being not assigned to any of the first number of ONUs; the method comprising: a) receiving an information about at least one of the first number of ONUs, from the OLT; b) receiving a downstream frame from the OLT, and obtaining a time of reception of a predetermined bit of the downstream frame; c) receiving an upstream optical signal from a first network node communicatively coupled to the first ONU and the first number of ONUs, and detecting an envelope of the upstream optical signal, the upstream optical signal comprising burst signals transmitted by the first number of ONUs in response to the downstream frame respectively on the time interval assigned to them; d) determining a temporal position of the at least one predetermined time slot that is not used by the first number of ONUs in an upstream frame based on the envelope of the upstream optical signal; e) determining a first equalization delay based on the envelope of the upstream optical signal, the time of reception of a predetermined bit of the downstream frame and the information about the at least one of the first number of ONUs; f) transmitting a first signal to the OLT using the at least one predetermined time slot based on the first equalization delay;
wherein the information about the at least one of the first number of ONUs comprises a location of a time slot that is assigned to the at least one of the first number of ONUs in an upstream frame, equalization delay, exact response time and start time for the at least one of the first number of ONUs, and distances between the first network node and the at least one of the first number of ONUs.

In a preferred embodiment, step e) further comprises: e1) determining respectively a time delay from the time of reception of the predetermined bit of the downstream frame to a starting time of the burst signal transmitted by the at least one of the first number of ONUs; e2) determining a distance between the first ONU and the first network node based on the time delay and the information about the at least one of the first number of ONUs; e3) determining the first equalization delay based on the temporal position of the at least one predetermined time slot and the distance between the first ONU and the first network node.

In a preferred embodiment, the first signal is a physical layer operation, administration and maintenance message, PLOAM, message.

In a preferred embodiment, a wavelength of a downstream signal is different from that of an upstream burst.

According to another aspect of the present invention, there is provided a method in an Optical Line Terminal, OLT, of assisting a first Optical Network Unit, ONU, starting up a communication with the OLT, the OLT being communicatively coupled to the first ONU that is not yet in operation and a first number of ONUs that are already in operation, wherein, the first number is a natural number; the method comprising: a) assigning to each of the first number of ONUs a time interval within an upstream frame to transmit an upstream burst to the OLT, while leaving at least one predetermined time slot in the upstream frame not assigned to any of the first number of ONUs; b) transmitting an information about at least one of the first number of ONUs to the first ONU that is not yet in operation; c) transmitting downstream frames to the first ONU and the first number of ONUs; d) receiving a first signal from the first ONU on the at least one predetermined time slot that is not assigned to any of the first number of ONUs; e) determining parameters that are necessary to establish communication with the first ONU;
wherein the information about the at least one of the first number of ONUs comprises a location of a time slot that is assigned to the at least one of the first number of ONUs in an upstream frame, equalization delay, exact response time and start time for the at least one of the first number of ONUs, and distances between a first network node and the at least one of the first number of ONUs, said first network node being communicatively coupled to the OLT, the first ONU and the first number of ONUs.

In a preferred embodiment, the method further comprises: receiving an upstream optical signal comprising burst signals transmitted by the first number of ONUs in response to a downstream frame respectively on the time interval assigned to them; providing the upstream optical signal to the first ONU that is not yet in operation.

In a preferred embodiment, the at least one predetermined time slot is long enough to accommodate the first ONU.

According to another aspect of the present invention, there is provided a first Optical Network Unit, ONU, being communicatively coupled to an Optical Line Terminal, OLT, the OLT being further communicatively coupled to a first number of ONUs that are already in operation, the first number being a natural number, each of the first number of ONUs being assigned to a time interval within an upstream frame to transmit an upstream burst to the OLT, at least one predetermined time slot in the upstream frame being not assigned to any of the first number of ONUs; the first ONU comprising: a downstream receiver, configured to: receive an information about at least one of the first number of ONUs, from the OLT; and receive a downstream frame from the OLT; an upstream receiver, configured to: receive an upstream optical signal from a first network node communicatively coupled to the first ONU and the first number of ONUs and configured to receive said upstream optical signal comprising burst signals transmitted by the first number of ONUs in response to the downstream frame respectively on the time assigned to them and to provide the upstream optical signal to the first ONU,
and to detect an envelope of the upstream optical signal; a determining unit, configured to: determine a temporal position of the at least one predetermined time slot that is not used by the first number of ONUs in an upstream frame based on the envelope of the upstream optical signal; and determine a first equalization delay based on the envelope of the upstream optical signal, a time of reception of a predetermined bit of the downstream frame and the information about the at least one of the first number of ONUs; an upstream transmitter, configured to: transmit a first signal to the OLT using the at least one predetermined time slot based on the first equalization delay;
wherein the information about the at least one of the first number of ONUs comprises a location of a time slot that is assigned to the at least one of the first number of ONUs in an upstream frame, equalization delay, exact response time and start time for the at least one of the first number of ONUs, and distances between the first network node and the at least one of the first number of ONUs.

In a preferred embodiment, the determining unit is further configured to: determine respectively a time delay from the time of reception of the predetermined bit of the downstream frame to a starting time of the burst signal transmitted by the at least one of the first number of ONUs; determine a distance between the first ONU and the first network node based on the time delay and the information about the at least one of the first number of ONUs; determine the first equalization delay based on the temporal position of the at least one predetermined time slot and the distance between the first ONU and the first network node.

According to another aspect of the present invention, there is provided an Optical Line Terminal, OLT, being communicatively coupled to a first Optical Network Unit, ONU that is not yet in operation and a first number of ONUs that are already in operation, wherein, the first number is a natural number; the OLT being configured to: a) assign to each of the first number of ONUs a time interval within an upstream frame to transmit an upstream burst to the OLT, while leaving at least one predetermined time slot in the upstream frame not assigned to any of the first number of ONUs; b) transmit an information about at least one of the first number of ONUs to the first ONU that is not yet in operation; c) transmit downstream frames to the first ONU and the first number of ONUs; d) receive a first signal from the first ONU on the at least one predetermined time slot that is not assigned to any of the first number of ONUs; and e) determine parameters that are necessary to establish communication with the first ONU;

wherein the information about the at least one of the first number of ONUs comprises a location of a time slot that is assigned to the at least one of the first number of ONUs in an upstream frame, equalization delay, exact response time and start time for the at least one of the first number of ONUs, and distances between a first network node and the at least one of the first number of ONUs, said first network node being communicatively coupled to the OLT, the first ONU and the first number of ONUs.

According to the present invention, the low-latency and high throughput fronthaul over PON for fixed-mobile converged network can be realized, where no quiet windows are required to establish new ONU connections. The major advantage is that only small additional equipment cost at the ONU occurs and that this method is mostly independent of the PON operation.

Brief description of the figures

The features and advantages of the invention will be more completely understood by appreciating the following detailed description of preferred embodiments with reference to the figures, wherein

Fig. 1 depicts a schematic block diagram of a network topology according to an embodiment of the present invention;
Fig. 2 depicts a schematic block diagram of a network topology according to another embodiment of the present invention;
Fig. 3 depicts a flow diagram of the method according to the embodiment of Fig. 1;
Fig. 4 depicts a timing diagram of an embodiment according to an embodiment of the present invention;
Fig. 5 depicts a schematic block diagram of an ONU according to an embodiment of the present invention;
Fig. 6 depicts an exemplary upstream signal received at ONU 103c according to the embodiment of Fig. 1;
Fig. 7 depicts a bit level decision as a function of the threshold position for the upstream receiver according Fig. 6.

Wherein, same or similar reference numerals refer to same or similar parts or components.

Detailed description

Exemplary embodiments of the present application are described herein in detail and shown by way of example in the drawings. It should be understood that, although specific exemplary embodiments are discussed herein there is no intent to limit the scope of the invention to such embodiments. To the contrary, it should be understood that the exemplary embodiments discussed herein are for illustrative purposes, and that modified and alternative embodiments may be implemented without departing from the scope of the invention as defined in the claims. Similarly, specific structural and functional details disclosed herein are merely representative for purposes of describing the exemplary embodiments. The invention described herein, however, may be embodied in many alternate forms and should not be construed as limited to only the embodiments set forth herein.

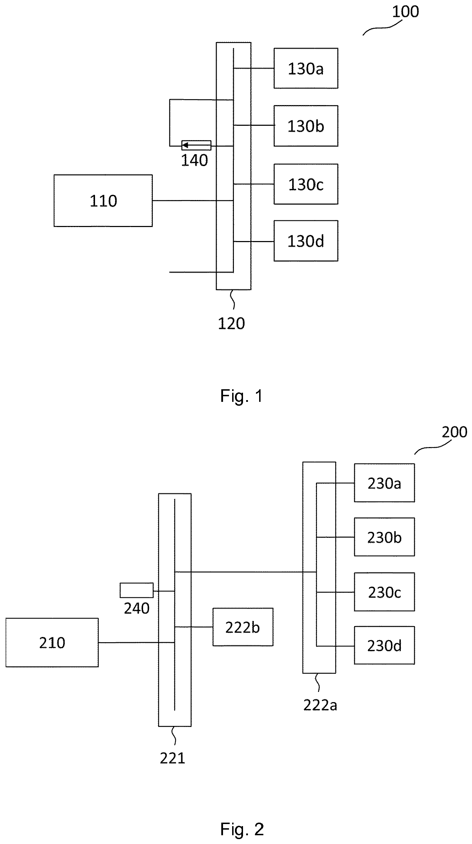

Fig.1 shows a schematic block diagram of a network topology according to an embodiment of the present invention.

The optical network 100 comprises an OLT 110, a first network node implemented as a power splitter 120, and four ONUs 130a, 130b, 130c and 130d. The number of the ONUs is merely an example. In another embodiment, the optical network 100 may comprise less or more ONUs.

As shown in Fig. 1, the OLT 110 is communicatively coupled to the ONUs 130a, 130b, 130c and 130d via the power splitter 120. The power splitter 120 distributes the downstream signal from the OLT 110 to all the ONUs, and converges the upstream bursts from different ONUs to the OLT 110. Preferably, the downstream signal and the upstream bursts are transmitted at different optical frequencies. A skilled person shall understand, there may be more optical components connected between the OLT 110 and the ONUs, for example more power splitters and/or optical amplifier(s).

In the embodiment shown in Fig. 1, the ONUs 130a, 130b and 130d are already in operation and the ONU 130c is not yet in operation. The OLT 110 assigns to each of the ONUs that are already in operation a time interval within an upstream frame. The ONUs that are already in operation use the time interval assigned to them to transmit an upstream burst to the OLT 110 respectively. The OLT 110 is configured to leave at least one predetermined time slot in an upstream frame not assigned to any of the ONUs that are already in operation. In one embodiment, the time interval assigned to the operational ONUs can be dynamically changed, preferably according to the bandwidth requirement of the respective ONU. However, the at least one predetermined time slot shall not be assigned to any operational ONU during the dynamic allocation of time slots. Meanwhile, the at least one predetermined time slot is long enough to accommodate the first ONU 130c. In one embodiment, the at least one predetermined time slot is long enough to accommodate a burst carrying a PLOAM message and necessary guard time between bursts from different ONUs.

The first network node implemented as the power splitter 120 in Fig.1 is configured to receive an upstream optical signal comprising burst signals transmitted by the ONUs 130a, 130b and 130d in response to a downstream frame respectively on the time intervals assigned to them; and the first network node is further configured to provide the upstream optical signal to the ONU 130c that is not yet in operation.

Basically, each power splitter is of type NxN, but often just a single branch is used at one side (the OLT side) leading to the popular 1xN architecture. It means that a power splitter normally has unused branches on the OLT side.

Specifically, in the embodiment shown in Fig. 1, the power splitter 120 comprises four branches on one side, among which one branch is connected to the OLT 110, two other branches are connected together, preferably with an isolator 140 there between. The power splitter 120 further comprises four branches on the other side, which are respectively connected to the four ONUs 130a, 130b, 130c and 130d.

In another embodiment, the power splitter 120 may comprise more or less branches.

Fig.2 shows a schematic block diagram of a network topology according to another embodiment of the present invention.

In the embodiment shown in Fig. 2, the network components that are similar to those described above with respect to Fig. 1 will not be elaborated.

In Fig. 2, the optical network 200 comprises cascaded power splitters. The power splitter 221 in the first level is connected to the OLT 210 on one side, and on the other side connected to two power splitters 222a and 222b in the second level. Each of the power splitters in the second level 222a and 222b is connected to four ONUs. For simplicity, only the four ONUs 230a, 230b, 230c, 230d connected to the power splitter 222a are shown in Fig. 2. A skilled person shall understand, in another embodiment, the power splitters may be cascaded in more than two levels. The split number and split ratio of the power splitters in each level is not limited to the given example, and can be any possible value.

In the embodiment shown in Fig. 2, the first network node is implemented in the power splitter 221 located closest to the OLT 210 in terms of physical fiber distance. The function of the first network node is implemented in Fig. 2 by configuring a mirror 240 on one branch of the power splitter on the OLT 210 side.

Alternatively, in the embodiment shown in Fig. 2, the first network node may be considered as comprising all the cascaded power splitters 221, 222a and 222b.

The function of the first network node may be realized in other ways. For example, in another embodiment, the function of the first network node may be implemented directly in the OLT. In that case, the OLT is further configured to carry out the function of the first network node, namely looping back the upstream signals to the ONUs.

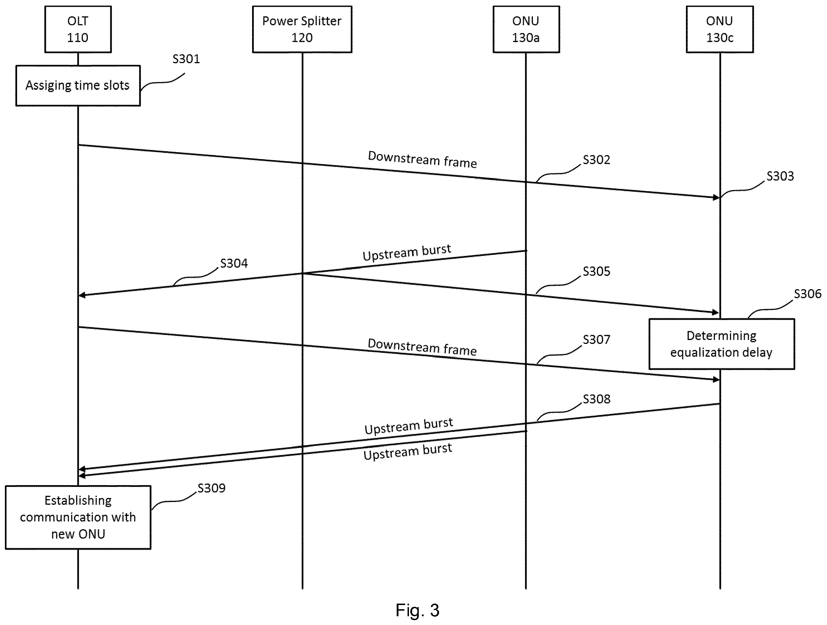

Fig. 3 shows a flow diagram of the method according to the embodiment of Fig. 1.

As described with respect to Fig. 1, the ONUs 130a, 130b and 130d are already in operation and the ONU 130c is not yet in operation. For simplicity, only one in-operational ONU 130a is discussed here with respect to Fig. 3. A skilled person shall understand, and the method described herein can be easily adapted to embodiments with more operational ONUs.

By way of example, in Fig. 3, the ONU 130a has a shorter distance to the OLT 110 and the power splitter 120 comparing to ONU 130c. In another embodiment, the ONU 130a may have a longer distance to the OLT 110 and the power splitter 120 comparing to ONU 130c.

In step S301, the OLT 110 assigns a time slot to the operational ONU 130a, and leaves at least one predetermined time slot within an upstream frame not assigned to any of the ONUs that are already in operation.

In step S302, the OLT 110 transmits a bandwidth map in a downstream frame to the ONU 130a and the ONU 130c. In another embodiment with more than one operational ONU, the OLT may broadcast the bandwidth map to all the ONUs 130 connected to the OLT 110. However, it is sufficient for the ONU 130c to determine the equalization delay based on information about only one of the operational ONUs.

Specifically, the information transmitted from the OLT 110 to the ONU 130c in step S302 comprises a location of the time slot that is assigned to the ONU 130a in an upstream frame, equalization delay, exact response time and start time for the ONU 130a, and distance between the power splitter 120 and the ONU130a. Alternatively, the OLT 110 may transmit a distance between the OLT 110 and the power splitter 120 and a distance between the power splitter 120 and the ONU 130a to the ONU 130c. Then the ONU 130c may determine the distance between the power splitter 120 and the ONU130a based on the distance between the OLT 110 and the power splitter 120 and the distance between the power splitter 120 and the ONU 130a.

After receiving the downstream frame, the ONU 130c obtains a time of reception of a predetermined bit, e.g. the first bit of the downstream frame in step S303. The time of reception of the first bit of the downstream frame is saved in the ONU130c for later use.

In response to the downstream frame, ONU 130a uses the time interval assigned to it to transmit an upstream burst signal to the OLT 110 in step S304. According to the network topology shown in Fig. 1, the upstream burst signal from ONU 130a is sent to the OLT 110 via the power splitter 120.

When the upstream burst signal from ONU 130a is received by the power splitter 120, the loopback mechanism provides the upstream burst signal from ONU 130a to the ONU 130c in step S305.

In an embodiment with more operational ONUs, the power splitter 120 may provide the upstream signal comprising burst signals transmitted by all the operational ONUs to the ONU 130c.

In step S306, the ONU 130c determines a first equalization delay based on the envelope of the upstream optical signal received from the power splitter 120, the time of reception of a predetermined bit, e.g. a first bit of the downstream frame and the information about the ONU 130a.

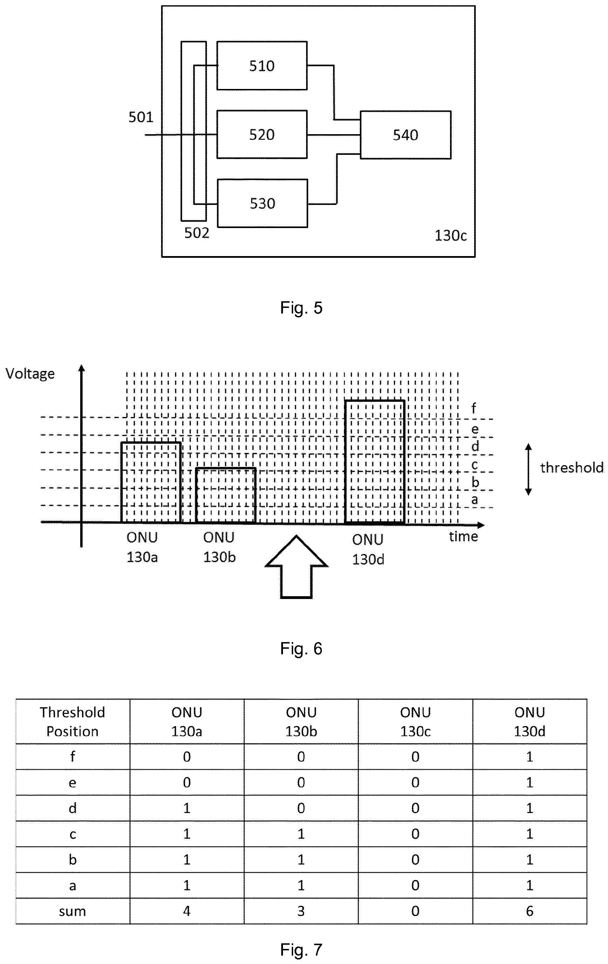

Specifically, the envelope of the upstream optical signal can be obtained by configuring another low-rate upstream receiver in the ONU 130c in addition to a normal downstream receiver and an upstream transmitter. A temporal position of the at least one predetermined time slot that is not assigned to the operational ONUs in an upstream frame can be determined based on the envelope of the upstream optical signal. This will be described further in detail with respect to Figs. 5-7.

In one embodiment, the ONU 130c determines a time delay from the time of reception of the first bit of the downstream frame to a starting time of the burst signal transmitted by the ONU 130a. Then, the ONU 130c determines a distance between the ONU 130c and the power splitter 120 based on the time delay and the information about the ONUs 130a. Then, the ONU 130c determines the first equalization delay based on the temporal position of the at least one predetermined time slot and the distance between the first ONU 130c and power splitter 120.

In one embodiment, the starting time of the burst signal transmitted by the ONU 130a is obtained by sampling the envelope of the upstream signal received from the power splitter 120 based on a time basis. In the embodiment with more than one operational ONU, the starting time of the burst signal transmitted by ONU 130a is determined based on the envelope and the bandwidth map, i.e., a location of a time slot that is assigned to the ONU 130a in an upstream frame. For example, the OLT informs the ONU 130c that the second burst in an upstream frame is assigned to the ONU 130a. The ONU 130c determines the start time of the second burst in an upstream frame as the start time of the burst signal transmitted by ONU 130a. In one embodiment, the time basis of sampling is selected as 10% of the shortest possible burst duration. The time basis may be selected as other value according to the requirement of the uncertainty of empty slot identification.

After the first equalization delay is determined, when the ONU 130c receives another downstream frame form the OLT 110 in step S307, it may use the at least one predetermined time slot to transmit a first signal to the OLT 110 based on the first equalization delay in step S308 without collision with the upstream burst from other operational ONU 130a.

In one embodiment, the first signal is a physical layer operation, administration and maintenance message, PLOAM, message.

After the OLT 110 receives the PLOAM message from the ONU 130c, it determines parameters that are necessary to establish communication with the ONU 130c in step S309. This can be carried out according to method known to a skilled person and will not be elaborated here.

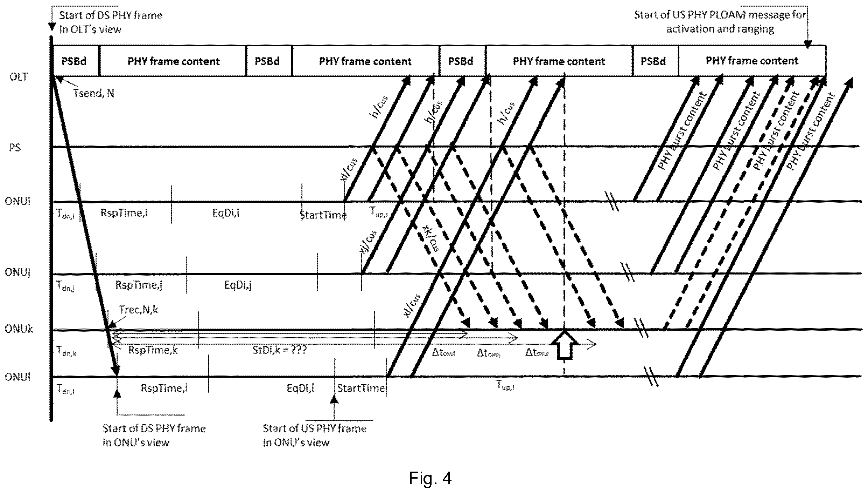

Specifically, the estimation of the first equalization delay, and the determination of a startup time is going to be described in detail with respect to Fig. 4.

Fig. 4 shows a timing diagram according to one embodiment of the present invention.

In the embodiment shown in Fig. 4, the optical network comprises three ONUs that are already in operation, namely ONUs i, j and l. The $ONU_k$ is the first ONU which is not yet in operation but intend to communicate with the OLT.

In Fig. 4 a timing diagram is given for the k-th starting $ONU_k$. In the following, a short explanation of the different abbreviations and the processes will be given and then the details about the calculation to find the starting point to send the short PLOAM message to start talking to the OLT will be explained.

The OLT sends a frame N in downstream (DS) direction at the point in time $T_{send,N}$. The time interval, which the downstream frame needs to travel in downstream direction along the Single Mode Fiber to the $ONU_i$ is $T_{dn,i}$. Accordingly, this time interval is $T_{dn,j}$; $T_{dn,k}$; and $T_{dn,l}$ for the ONUs j, k, l. Each ONU has a response time, RspTime, to process the downstream frame, which is known and equal 35 $\mu s \pm 1 \mu s$ for each ONU in the system, and it is more precisely known for ONUs that are already in operation. In the present embodiment, since, the ONUs i, j and l are already in-operation, their equalization delay, $EqD_i$, as well as their start time is already set by the OLT.

The operational ONUs send their upstream bursts along the fiber in upstream (US) direction. The optical signal is directed to the OLT receiver as usual as well as redirected by the loopback implemented at the first network node, namely the power splitter (PS) in the present embodiment. The time that the individual ONU bursts require to be present at the k-th ONU receiver depend on the distance x of the respective ONU to the PS, i.e., $x_i/c_{us}$; $x_j/c_{us}$; $x_l/c_{us}$ ($c_{us}$ is the speed of light in the SMF fiber for the upstream wavelength) and of the distance between the PS and the starting ONU, here $ONU_k$, $x_k/c_{us}$.

The timing offset $\Delta t_{ONU,i}$, $\Delta t_{ONU,j}$, $\Delta t_{ONU,l}$ between the beginning of each of the received bursts at the k-th ONU and the reception of the downstream frame are measured as described above.

The set of basic equations that can be used to calculate the unknown distance $x_k$ that is required to identify the start time for the starting ONU are listed below. The reference point is always the reception of the DS frame (time of reception of a predetermined bit of the downstream frame) in view of the starting ONU.

$$\Delta t_{ONU_i} = \frac{x_k}{c_{us}} + \frac{x_i}{c_{us}} + starttime_i + EqDi_i + RspTime_i - \left(\frac{x_k - x_i}{c_{ds}}\right), \quad t_{dn,k} - t_{dn,i} = \left(\frac{x_k - x_i}{c_{ds}}\right)$$

$$\Delta t_{ONU_j} = \frac{x_k}{c_{us}} + \frac{x_j}{c_{us}} + starttime_j + EqDi_j + RspTime_j - \left(\frac{x_k - x_j}{c_{ds}}\right), \quad t_{dn,k} - t_{dn,j} = \left(\frac{x_k - x_j}{c_{ds}}\right)$$

$$\Delta t_{ONU_l} = \frac{x_k}{c_{us}} + \frac{x_l}{c_{us}} + starttime_l + EqDi_l + RspTime_l - \left(\frac{x_k - x_l}{c_{ds}}\right), \quad t_{dn,k} - t_{dn,l} = \left(\frac{x_k - x_l}{c_{ds}}\right)$$

Based on the information about distances between the first network node and the respective ONU, equalization delay, the exact response time and the start time for the individual ONUs provided by the OLT via downlink signal to the starting ONU, it is possible to obtain a unique solution of the linear system for the $x_k$ parameter at the k-th ONU assessment.

Alternatively, the OLT may send the distances (L) between the operational ONUs and the OLT, and the distance (h) between the OLT and the first network node, here the power splitter to the starting $ONU_k$.

Distances between the first network node and the respective ONU can be easily determined based on:

$$L_i = h + x_i$$

$$L_j = h + x_j$$

$$L_l = h + x_l$$

Distance between the first node and the OLT (h) can be obtained from an optical time-domain reflectometry (OTDR) measurement of the outside plant as typically performed in the installation phase.

This way, three equations are obtained with a single unknown parameter, $x_k$, that can be easily calculated.

Once $x_k$ has been calculated, the start-delay for the starting k-th ONU ($StD_{i,k}$) can be calculated using in addition the estimate for the time location of the empty time slot $\Delta t_{ONU,k}$.

$$\Delta t_{ONU_k} = \frac{x_k}{c_{us}} + \frac{x_k}{c_{ds}} + StDi_k + RspTime_k$$

Fig. 5 shows a schematic block diagram of an ONU according to an embodiment of the present invention.

In the embodiment shown in Fig. 5, the ONU 130c comprises a downstream receiver 510, an upstream receiver 520, an upstream transmitter 530 and a determining unit 540.

Specifically, the downstream receiver 510, the upstream receiver 520 and the upstream transmitter 530 are all coupled to the fiber 501 via a component 502. The component 502 may be implemented as a power splitter together with a filter on each branch. Alternatively, the component 502 may be implemented as diplexers, circulators or isolators.

The downstream receiver 510 is configured to receive downstream signal from the OLT 110, including information about the ONU 130a and downstream frames. The upstream receiver 520 is configured to receive an upstream optical signal from the power splitter 120, and detect an envelope of the upstream optical signal. The determining unit 540 is configured to determine a temporal position of the at least one predetermined time slot in an upstream frame based on the envelope of the upstream optical signal and determine a first equalization delay based on the envelope of the upstream optical signal, a time of reception of a predetermined bit, e.g., the first bit of the downstream frame and the information about the ONU 130a. The upstream transmitter 530 is configured to transmit a first signal to the OLT 110 using the at least one predetermined time slot based on the first equalization delay.

Fig. 6 shows an exemplary upstream signal received at ONU 103c according to the embodiment of Fig. 1.

As described above with respect to Fig. 1, ONUs 130a, 130b, 130d are in-operation and ONU 130c is not yet in operation. The burst envelope from ONUs 130a, 130b and 130d can be resolved by the upstream receiver 520 of ONU 130c as shown in Fig. 6.

Specifically, the upstream receiver 520 needs to be able to detect only the envelope of the bursts. This means that the receiver sampling circuit needs to operate in the kbit/s range (31.25 $\mu$s relates to 32 kbit/s sampling and even if 16 slots per frame are used, i.e. 7.8 $\mu$s time slots, 128 kbit/s sampling is required). The upstream envelope receiver 520 may comprise an avalanche photodiode (APD), a trans-impedance amplifier (TIA) and a threshold/slicer of which the level can be swept across different voltage levels. For a limited number of voltage steps the decision process is executed, i.e., a binary decision between a "1" level and a "0"level is performed.

Fig. 7 shows a bit level decision as a function of the threshold position for the envelope upstream receiver from Fig. 6.

The results according to the different threshold levels a-f for the corresponding time slots for ONU 130a to ONU 130d are shown in Fig. 7. Obviously, taking the sum of the different detection processes, empty time slots can be obtained with a high probability (assuming that the individual decisions are performed with a bit error ratio of 1 E-12).

## Claims

1. A method in a first network node, of assisting a first Optical Network Unit, ONU (130c), starting up a communication with an Optical Line Terminal, OLT (110), the first network node being communicatively coupled to the OLT (110), the first ONU (130c) that is not yet in operation and a first number of ONUs (130a, 130b, 130d) that are already in operation, the first number being a natural number, each of the first number of ONUs (130a, 130b, 130d) being assigned to a time interval within an upstream frame to transmit an upstream burst to the OLT(110), at least one predetermined time slot in the upstream frame being not assigned to any of the first number of ONUs (130a, 130b, 130d);
   the method comprising:

   a) receiving an upstream optical signal comprising burst signals transmitted by the first number of ONUs (130a, 130b, 130d) in response to a downstream frame respectively on the time interval assigned to them;
   b) providing the upstream optical signal to the first ONU (130c) that is not yet in operation.

2. A method according to claim 1, wherein, the first network node is a power splitter (120,221).

3. A method according to claim 2, wherein, the optical network comprises a plurality of cascaded power splitters (221, 222a, 222b), the first network node is the power splitter (221) located closest to the OLT (110) in terms of physical fiber distance.

4. A method in a first Optical Network Unit, ONU (130c), of starting up a communication with an Optical Line Terminal, OLT (110), the OLT (110) being communicatively coupled to the first ONU (130c), and a first number of ONUs (130a, 130b, 130d) that are already in operation, the first number being a natural number, each of the first number of ONUs (130a, 130b, 130d) being assigned to a time interval within an upstream frame to transmit an upstream burst to the OLT (110), at least one predetermined time slot in the upstream frame being not assigned to any of the first number of ONUs (130a, 130b, 130d);
   the method comprising:

   a) receiving an information about at least one of the first number of ONUs (130a), from the OLT (110);
   b) receiving a downstream frame from the OLT (110), and obtaining a time of reception of a predetermined bit of the downstream frame;
   c) receiving an upstream optical signal from a first network node (120, 221) communicatively coupled to the first ONU (130c) and the first number of ONUs (130a, 130b, 130d), and detecting an envelope of the upstream optical signal, the upstream optical signal comprising burst signals transmitted by the first number of ONUs (130a, 130b, 130d) in response to the downstream frame respectively on the time interval assigned to them;

d) determining a temporal position of the at least one predetermined time slot that is not used by the first number of ONUs (130a, 130b, 130d) in an upstream frame based on the envelope of the upstream optical signal;

e) determining a first equalization delay based on the envelope of the upstream optical signal, the time of reception of a predetermined bit of the downstream frame and the information about the at least one of the first number of ONUs (130a);

f) transmitting a first signal to the OLT (110) using the at least one predetermined time slot based on the first equalization delay;

wherein the information about the at least one of the first number of ONUs (130a) comprises a location of a time slot that is assigned to the at least one of the first number of ONUs (130a) in an upstream frame, equalization delay, exact response time and start time for the at least one of the first number of ONUs (130a), and distances between the first network node (120, 221) and the at least one of the first number of ONUs (130a).

5. A method according to claim 4, wherein, step e) further comprises:

e1) determining respectively a time delay from the time of reception of the predetermined bit of the downstream frame to a starting time of the burst signal transmitted by the at least one of the first number of ONUs (130a);

e2) determining a distance between the first ONU (130c) and the first network node (120, 221) based on the time delay and the information about the at least one of the first number of ONUs (130a);

e3) determining the first equalization delay based on the temporal position of the at least one predetermined time slot and the distance between the first ONU (130c) and the first network node (120, 221).

6. A method according to claim 4, wherein, the first signal is a physical layer operation, administration and maintenance message, PLOAM, message.

7. A method according to claim 4, wherein, a wavelength of a downstream signal is different from that of an upstream burst.

8. A method in an Optical Line Terminal, OLT (110), of assisting a first Optical Network Unit, ONU (130c), starting up a communication with the OLT (110), the OLT (110) being communicatively coupled to the first ONU (130c) that is not yet in operation and a first number of ONUs (130a, 130b, 130d) that are already in operation, wherein, the first number is a natural number;

the method comprising:

a) assigning to each of the first number of ONUs (130a, 130b, 130d) a time interval within an upstream frame to transmit an upstream burst to the OLT (110), while leaving at least one predetermined time slot in the upstream frame not assigned to any of the first number of ONUs (130a, 130b, 130d);

b) transmitting an information about at least one of the first number of ONUs (130a) to the first ONU (130c) that is not yet in operation;

c) transmitting downstream frames to the first ONU (130c) and the first number of ONUs (130a, 130b, 130d);

d) receiving a first signal from the first ONU (130c) on the at least one predetermined time slot that is not assigned to any of the first number of ONUs (130a, 130b, 130d);

e) determining parameters that are necessary to establish communication with the first ONU (130c);

wherein the information about the at least one of the first number of ONUs (130a) comprises a location of a time slot that is assigned to the at least one of the first number of ONUs (130a) in an upstream frame, equalization delay, exact response time and start time for the at least one of the first number of ONUs (130a), and distances between a first network node (120, 221) and the at least one of the first number of ONUs (130a), said first network node (120, 221) being communicatively coupled to the OLT (110), the first ONU (130c) and the first number of ONUs (130a, 130b, 130d).

9. A method according to claim 8, further comprising:

- receiving an upstream optical signal comprising burst signals transmitted by the first number of ONUs (130a, 130b, 130d) in response to a downstream frame respectively on the time interval assigned to them;

- providing the upstream optical signal to the first ONU (130c) that is not yet in operation.

10. A method according to claim 8, wherein, the at least one predetermined time slot is long enough to accommodate the first ONU (130c).

11. A first Optical Network Unit, ONU (130c), being communicatively coupled to an Optical Line Terminal, OLT (110), the OLT (110) being further communicatively coupled to a first number of ONUs (130a, 130b, 130d) that are already in operation, the first number being a natural number, each of the first number of ONUs (130a, 130b, 130d) being assigned to a time interval within an upstream frame to transmit an upstream burst to the OLT (110), at least one predetermined time slot in the upstream frame being not assigned to any of the first number of ONUs (130a, 130b, 130d);
the first ONU (130c) comprising:

   a downstream receiver (510), configured to:

      receive an information about at least one of the first number of ONUs (130a), from the OLT (110); and
      receive a downstream frame from the OLT (110);

   an upstream receiver (520), configured to:

      receive an upstream optical signal from a first network node (120, 221) communicatively coupled to the first ONU (130c) and the first number of ONUs (130a, 130b, 130d) and configured to receive said upstream optical signal comprising burst signals transmitted by the first number of ONUs (130a, 130b, 130d) in response to the downstream frame respectively on the time interval assigned to them and to provide the upstream optical signal to the first ONU (130c),
      and to detect an envelope of the upstream optical signal;

   a determining unit (540), configured to:

      determine a temporal position of the at least one predetermined time slot that is not used by the first number of ONUs (130a, 130b, 130d) in an upstream frame based on the envelope of the upstream optical signal; and
      determine a first equalization delay based on the envelope of the upstream optical signal, a time of reception of a predetermined bit of the downstream frame and the information about the at least one of the first number of ONUs (130a);

   an upstream transmitter (530), configured to:
   transmit a first signal to the OLT (110) using the at least one predetermined time slot based on the first equalization delay;
   wherein the information about the at least one of the first number of ONUs (130a) comprises a location of a time slot that is assigned to the at least one of the first number of ONUs (130a) in an upstream frame, equalization delay, exact response time and start time for the at least one of the first number of ONUs (130a), and distances between the first network node (120, 221) and the at least one of the first number of ONUs (130a).

12. A first ONU (130c) according to claim 11, the determining unit being further configured to:

   - determine respectively a time delay from the time of reception of the predetermined bit of the downstream frame to a starting time of the burst signal transmitted by the at least one of the first number of ONUs (130a);
   - determine a distance between the first ONU (130c) and the first network node (120, 221) based on the time delay and the information about the at least one of the first number of ONUs (130a);
   - determine the first equalization delay based on the temporal position of the at least one predetermined time slot and the distance between the first ONU (130c) and the first network node (120, 221).

13. An Optical Line Terminal, OLT (110), being communicatively coupled to a first Optical Network Unit, ONU (130c) that is not yet in operation and a first number of ONUs (130a, 130b, 130d) that are already in operation, wherein, the first number is a natural number;
the OLT being configured to:

   a) assign to each of the first number of ONUs (130a, 130b, 130d) a time interval within an upstream frame to transmit an upstream burst to the OLT (110), while leaving at least one predetermined time slot in the upstream frame not assigned to any of the first number of ONUs (130a, 130b, 130d);
b) transmit an information about at least one of the first number of ONUs (130a) to the first ONU (130c) that is not yet in operation;
c) transmit downstream frames to the first ONU (130c) and the first number of ONUs (130a, 130b, 130d);
d) receive a first signal from the first ONU (130c) on the at least one predetermined time slot that is not assigned to any of the first number of ONUs (130a, 130b, 130d); and
e) determine parameters that are necessary to establish communication with the first ONU (130c);

wherein the information about the at least one of the first number of ONUs (130a) comprises a location of a time slot that is assigned to the at least one of the first number of ONUs (130a) in an upstream frame, equalization delay, exact response time and start time for the at least one of the first number of ONUs (130a), and distances between a first network node (120, 221) and the at least one of the first number of ONUs (130a), said first network node (120, 221) being communicatively coupled to the OLT (110), the first ONU (130c) and the first number of ONUs (130a, 130b, 130d).

**Patentansprüche**

1. Verfahren in einem ersten Netzknoten zum Unterstützen einer optischen Netzeinheit, ONU, (130c), eine Kommunikation mit einem optischen Leitungsendgerät, OLT, (110) zu starten, wobei der erste Netzknoten an das OLT (110), die erste ONU (130c), die noch nicht in Betrieb ist, und eine erste Anzahl von ONUs (130a, 130b, 130d), die bereits in Betrieb sind, kommunikationstechnisch gekoppelt ist, wobei die erste Anzahl eine natürliche Zahl ist, wobei jede der ersten Anzahl von ONUs (130a, 130b, 130d) einem Zeitintervall innerhalb eines Aufwärtsstreckenrahmens zugeteilt ist, um einen Aufwärtsstrecken-Burst an das OLT (110) zu senden, wobei mindestens ein vorbestimmtes Zeitfenster in dem Aufwärtsstreckenrahmen keiner der ersten Anzahl von ONUs (130a, 130b, 130d) zugeteilt ist; wobei das Verfahren Folgendes umfasst:

a) Empfangen eines optischen Aufwärtsstreckensignals, das Burst-Signale umfasst, die durch die erste Anzahl von ONUs (130a, 130b, 130d) als Reaktion auf einen Abwärtsstreckenrahmen jeweils auf dem ihnen zugeteilten Zeitintervall gesendet werden;
b) Liefern des optischen Aufwärtsstreckensignals an die erste ONU (130c), die noch nicht in Betrieb ist.

2. Verfahren nach Anspruch 1, wobei der erste Netzknoten ein Leistungsteiler (120, 221) ist.

3. Verfahren nach Anspruch 2, wobei das optische Netz mehrere hintereinandergeschaltete Leistungsteiler (221, 222a, 222b) umfasst, wobei der erste Netzknoten der Leistungsteiler (221) ist, der sich im Hinblick auf einen physikalischen Faserabstand am nächsten an dem OLT (110) befindet.

4. Verfahren in einer ersten optischen Netzeinheit, ONU, (130c) zum Starten einer Kommunikation mit einem optischen Leitungsendgerät, OLT, (110), wobei das OLT (110) an die erste ONU (130c) und eine erste Anzahl von ONUs (130a, 130b, 130d), die bereits in Betrieb sind, kommunikationstechnisch gekoppelt ist, wobei die erste Anzahl eine natürliche Zahl ist, wobei jede der ersten Anzahl von ONUs (130a, 130b, 130d) einem Zeitintervall innerhalb eines Aufwärtsstreckenrahmens zugeteilt ist, um einen Aufwärtsstrecken-Burst an das OLT (110) zu senden, wobei mindestens ein vorbestimmtes Zeitfenster in dem Aufwärtsstreckenrahmen keiner der ersten Anzahl von ONUs (130a, 130b, 130d) zugeteilt ist; wobei das Verfahren Folgendes umfasst:

a) Empfangen von Informationen über mindestens eine der ersten Anzahl von ONUs (130a) von dem OLT (110);
b) Empfangen eines Abwärtsstreckenrahmens von dem OLT (110) und Erhalten einer Empfangszeit eines vorbestimmten Bits des Abwärtsstreckenrahmens;
c) Empfangen eines optischen Aufwärtsstreckensignals von einem ersten Netzknoten (120, 221), der an die erste ONU (130c) und die erste Anzahl von ONUs (130a, 130b, 130d) kommunikationstechnisch gekoppelt ist, und Detektieren einer Hüllkurve des optischen Aufwärtsstreckensignals, wobei das optische Aufwärtsstreckensignal Burst-Signale umfasst, die durch die erste Anzahl von ONUs (130a, 130b, 130d) als Reaktion auf den Abwärtsstreckenrahmen jeweils auf dem ihnen zugeteilten Zeitintervall gesendet werden;
d) Bestimmen einer zeitlichen Position des mindestens einen vorbestimmten Zeitfensters, das nicht durch die erste Anzahl von ONUs (130a, 130b, 130d) verwendet wird, in einem Aufwärtsstreckenrahmen anhand der Hüllkurve des optischen Aufwärtsstreckensignals;

e) Bestimmen einer ersten Ausgleichsverzögerung anhand der Hüllkurve des optischen Aufwärtsstreckensignals, der Empfangszeit eines vorbestimmten Bits des Abwärtsstreckenrahmens und der Informationen über die mindestens eine der ersten Anzahl von ONUs (130a);

f) Senden eines ersten Signals an das OLT (110) unter Verwendung des mindestens einen vorbestimmten Zeitfensters anhand der ersten Ausgleichsverzögerung;

wobei die Informationen über die mindestens eine der ersten Anzahl von ONUs (130a) einen Ort eines Zeitfensters, das der mindestens einen der ersten Anzahl von ONUs (130a) zugeteilt ist, in einem Aufwärtsstreckenrahmen, eine Ausgleichsverzögerung, eine exakte Antwortzeit und eine Startzeit für die mindestens eine der ersten Anzahl von ONUs (130a) und Abstände zwischen dem ersten Netzknoten (120, 221) und der mindestens einen der ersten Anzahl von ONUs (130a) umfasst.

5. Verfahren nach Anspruch 4, wobei der Schritt e) ferner Folgendes umfasst:

e1) Bestimmen jeweils einer Zeitverzögerung von der Empfangszeit des vorbestimmten Bits des Abwärtsstreckenrahmens zu einer Startzeit des durch die mindestens eine der ersten Anzahl von ONUs (130a) gesendeten Burst-Signals,

e2) Bestimmen eines Abstands zwischen der ersten ONU (130c) und dem ersten Netzknoten (120, 221) anhand der Zeitverzögerung und der Informationen über die mindestens eine der ersten Anzahl von ONUs (130a);

e3) Bestimmen der ersten Ausgleichsverzögerung anhand der zeitlichen Position des mindestens einen vorbestimmten Zeitfensters und des Abstands zwischen der ersten ONU (130c) und dem ersten Netzknoten (120, 221).

6. Verfahren nach Anspruch 4, wobei das erste Signal eine Betriebs-, Verwaltungs- und Wartungs-Nachricht einer physikalischen Schicht, PLOAM-Nachricht, ist.

7. Verfahren nach Anspruch 4, wobei eine Wellenlänge eines Abwärtsstreckensignals von der eines Aufwärtsstrecken-Bursts verschieden ist.

8. Verfahren in einem optischen Leitungsendgerät, OLT, (110) zum Unterstützen einer ersten optischen Netzeinheit, ONU, (130c), eine Kommunikation mit dem OLT (110) zu starten, wobei das OLT (110) an die erste ONU (130c), die noch nicht in Betrieb ist, und eine erste Anzahl von ONUs (130a, 130b, 130d), die bereits in Betrieb sind, kommunikationstechnisch gekoppelt ist, wobei die erste Anzahl eine natürliche Zahl ist;

wobei das Verfahren Folgendes umfasst:

a) Zuteilen zu jeder ersten Anzahl von ONUs (130a, 130b, 130d) eines Zeitintervalls innerhalb eines Aufwärtsstreckenrahmens, um einen Aufwärtsstrecken-Burst an das OLT (110) zu senden, während mindestens ein vorbestimmtes Zeitfenster in dem Aufwärtsstreckenrahmen keiner der ersten Anzahl von ONUs (130a, 130b, 130d) zugeteilt wird;

b) Senden von Informationen über mindestens eine der ersten Anzahl von ONUs (130a) an die erste ONU (130c), die noch nicht in Betrieb ist;

c) Senden von Abwärtsstreckenrahmen an die erste ONU (130c) und die erste Anzahl von ONUs (130a, 130b, 130d) ;

d) Empfangen eines ersten Signals von der ersten ONU (130c) auf dem mindestens einen vorbestimmten Zeitfenster, das keiner der ersten Anzahl von ONUs (130a, 130b, 130d) zugeteilt ist;

e) Bestimmen von Parametern, die notwendig sind, um eine Kommunikation mit der ersten ONU (130c) einzurichten;

wobei die Informationen über die mindestens eine der ersten Anzahl von ONUs (130a) einen Ort eines Zeitfensters, das der mindestens einen der ersten Anzahl von ONUs (130a) zugeteilt ist, in einem Aufwärtsstreckenrahmen, eine Ausgleichsverzögerung, eine exakte Antwortzeit und eine Startzeit für die mindestens eine der ersten Anzahl von ONUs (130a) und Abstände zwischen einem ersten Netzknoten (120, 221) und der mindestens einen der ersten Anzahl von ONUs (130a) umfassen, wobei der erste Netzknoten (120, 221) an das OLT (110), die erste ONU (130c) und die erste Anzahl von ONUs (130a, 130b, 130d) kommunikationstechnisch gekoppelt ist.

9. Verfahren nach Anspruch 8, das ferner Folgendes umfasst:

- Empfangen eines optischen Aufwärtsstreckensignals, das Burst-Signale umfasst, die durch die erste Anzahl von ONUs (130a, 130b, 130d) als Reaktion auf einen Abwärtsstreckenrahmen jeweils auf dem ihnen zugeteilten Zeitintervall gesendet werden;
- Liefern des optische Aufwärtsstreckensignals an die erste ONU (130c), die noch nicht in Betrieb ist.

10. Verfahren nach Anspruch 8, wobei das mindestens eine vorbestimmte Zeitfenster lang genug ist, um die erste ONU (130c) aufzunehmen.

11. Erste optische Netzeinheit, ONU, (130c), die an ein optisches Leitungsendgerät, OLT, (110) kommunikationstechnisch gekoppelt ist, wobei das OLT (110) ferner an eine erste Anzahl von ONUs (130a, 130b, 130d) gekoppelt ist, die bereits in Betrieb sind, wobei die erste Anzahl eine natürliche Zahl ist, wobei jede der ersten Anzahl von ONUs (130a, 130b, 130d) einem Zeitintervall innerhalb eines Aufwärtsstreckenrahmens zugeteilt ist, um einen Aufwärtsstrecken-Burst an das OLT (110) zu senden, wobei mindestens ein vorbestimmtes Zeitfenster in dem Aufwärtsstreckenrahmen keiner der ersten Anzahl von ONUs (130a, 130b, 130d) zugeteilt ist;
wobei die erste ONU (130c) Folgendes umfasst:

einen Abwärtsstreckenempfänger (510), der konfiguriert ist zum:

Empfangen von Informationen über mindestens eine der ersten Anzahl von ONUs (130a) von dem OLT (110); und
Empfangen eines Abwärtsstreckenrahmens von dem OLT (110);

einen Aufwärtsstreckenempfänger (520), der konfiguriert ist zum:

Empfangen eines optischen Aufwärtsstreckensignals von einem ersten Netzknoten (120, 221), der an die erste ONU (130c) und die erste Anzahl von ONUs (130a, 130b, 130d) kommunikationstechnisch gekoppelt ist und konfiguriert ist, das optische Aufwärtsstreckensignal zu empfangen, das Burst-Signale umfasst, die durch die erste Anzahl von ONUs (130a, 130b, 130d) als Reaktion auf den Abwärtsstreckenrahmen jeweils auf dem ihnen zugeteilten Zeitintervall gesendet werden, und das optische Aufwärtsstreckensignal an die erste ONU (130c) zu liefern,
und eine Hüllkurve des optischen Aufwärtsstreckensignals zu detektieren;

eine Bestimmungseinheit (540), die konfiguriert ist zum:

Bestimmen einer zeitlichen Position des mindestens einen vorbestimmten Zeitfensters, das nicht durch die erste Anzahl von ONUs (130a, 130b, 130d) verwendet wird, in einem Aufwärtsstreckenrahmen anhand der Hüllkurve des optischen Aufwärtsstreckensignals; und
Bestimmen einer ersten Ausgleichsverzögerung anhand der Hüllkurve des optischen Aufwärtsstreckensignals, einer Empfangszeit eines vorbestimmten Bits des Abwärtsstreckenrahmens und der Informationen über die mindestens eine der ersten Anzahl von ONUs (130a);

einen Aufwärtsstreckensender (530), der konfiguriert ist zum:

Senden eines ersten Signals an das OLT (110) unter Verwendung des mindestens einen vorbestimmten Zeitfensters anhand der ersten Ausgleichsverzögerung;
wobei die Informationen über die mindestens eine der ersten Anzahl von ONUs (130a) einen Ort eines Zeitfensters, das der mindestens einen der ersten Anzahl von ONUs (130a) zugeteilt ist, in einem Aufwärtsstreckenrahmen, eine Ausgleichsverzögerung, eine exakte Antwortzeit und eine Startzeit für die mindestens eine der ersten Anzahl von ONUs (130a) und Abstände zwischen dem ersten Netzknoten (120, 221) und der mindestens einen der ersten Anzahl von ONUs (130a) umfassen.

12. Erste ONU (130c) nach Anspruch 11, wobei die Bestimmungseinheit ferner konfiguriert ist zum:

- Bestimmen jeweils einer Zeitverzögerung aus der Empfangszeit des vorbestimmten Bits des Abwärtsstreckenrahmens zu einer Startzeit des Burst-Signals, das durch die mindestens eine der ersten Anzahl von ONUs (130a) gesendet wird;
- Bestimmen eines Abstands zwischen der ersten ONU (130c) und dem ersten Netzknoten (120, 221) anhand der Zeitverzögerung und der Informationen über die mindestens eine der ersten Anzahl von ONUs (130a);

- Bestimmen der ersten Ausgleichsverzögerung anhand der zeitlichen Position des mindestens einen vorbestimmten Zeitfensters und des Abstands zwischen der ersten ONU (130c) und dem ersten Netzknoten (120, 221).

13. Optisches Leitungsendgerät, OLT, (110), das an eine erste optische Netzeinheit, ONU, (130c), die noch nicht in Betrieb ist, und eine erste Anzahl von ONUs (130a, 130b, 130d), die bereits in Betrieb sind, kommunikationstechnisch gekoppelt ist, wobei die erste Anzahl eine natürliche Zahl ist;
wobei das OLT konfiguriert ist zum:

a) Zuteilen zu jeder ersten Anzahl von ONUs (130a, 130b, 130d) eines Zeitintervalls innerhalb eines Aufwärtsstreckenrahmens, um einen Aufwärtsstrecken-Burst an das OLT (110) zu senden, während mindestens ein vorbestimmtes Zeitfenster in dem Aufwärtsstreckenrahmen keiner der ersten Anzahl von ONUs (130a, 130b, 130d) zugeteilt wird;
b) Senden von Informationen über mindestens eine der ersten Anzahl von ONUs (130a) an die erste ONU (130c), die noch nicht in Betrieb ist;
c) Senden von Abwärtsstreckenrahmen an die erste ONU (130c) und die erste Anzahl von ONUs (130a, 130b, 130d);
d) Empfangen eines ersten Signals von der ersten ONU (130c) auf dem mindestens einen vorbestimmten Zeitfenster, das keiner der ersten Anzahl von ONUs (130a, 130b, 130d) zugeteilt ist; und
e) Bestimmen von Parametern, die notwendig sind, um eine Kommunikation mit der ersten ONU (130c) einzurichten;

wobei die Informationen über die mindestens eine der ersten Anzahl von ONUs (130a) einen Ort eines Zeitfensters, der der mindestens einen der ersten Anzahl von ONUs (130a) zugeteilt ist, in einem Aufwärtsstreckenrahmen, eine Ausgleichsverzögerung, eine exakte Antwortzeit und eine Startzeit für die mindestens eine der ersten Anzahl von ONUs (130a) und Abstände zwischen einem ersten Netzknoten (120, 221) und der mindestens einen der ersten Anzahl von ONUs (130a) umfassen, wobei der erste Netzknoten (120, 221) an das OLT (110), die erste ONU (130c) und die erste Anzahl von ONUs (130a, 130b, 130d) kommunikationstechnisch gekoppelt ist.

## Revendications

1. Procédé dans un premier nœud de réseau destiné à aider une première unité de réseau optique, ONU (130c), à démarrer une communication avec un terminal de ligne optique, OLT (110), le premier nœud de réseau étant couplé de manière communicative à l'OLT (110), à la première ONU (130c) qui n'est pas encore en service et à un premier nombre d'ONU (130a, 130b, 130d) qui sont déjà en service, le premier nombre étant un nombre naturel, chacune du premier nombre d'ONU (130a, 130b, 130d) étant affectée à un intervalle de temps dans une trame montante pour transmettre une salve montante à l'OLT (110), au moins un intervalle de temps prédéterminé dans la trame montante n'étant affecté à aucune du premier nombre d'ONU (130a, 130b, 130d) ;
le procédé comprenant :

a) la réception d'un signal optique montant comprenant des signaux en rafale transmis par le premier nombre d'ONU (130a, 130b, 130d) en réponse à une trame descendante sur, respectivement, l'intervalle de temps qui leur est affecté ;
b) la fourniture du signal optique montant à la première ONU (130c) qui n'est pas encore en service.

2. Procédé selon la revendication 1, dans lequel, le premier nœud de réseau est un diviseur de puissance (120, 221).

3. Procédé selon la revendication 2, dans lequel, le réseau optique comprend une pluralité de diviseurs de puissance en cascade (221, 222a, 222b), le premier nœud de réseau est le diviseur de puissance (221) situé le plus près de l'OLT (110) en termes de distance de fibre physique.

4. Procédé dans une première unité de réseau optique, ONU (130c), pour démarrer une communication avec un terminal de ligne optique, OLT (110), l'OLT (110) étant couplé de manière communicative à la première ONU (130c), et à un premier nombre d'ONU (130a, 130b, 130d) qui sont déjà en service, le premier nombre étant un nombre naturel, chacune du premier nombre d'ONU (130a, 130b, 130d) étant affectée à un intervalle de temps dans une trame montante pour transmettre une salve montante à l'OLT (110), au moins un intervalle de temps prédéterminé dans la trame montante n'étant affecté à aucune du premier nombre d'ONU (130a, 130b, 130d) ;
le procédé comprenant :

a) la réception d'informations concernant au moins l'une du premier nombre d'ONU (130a), en provenance de l'OLT (110) ;

b) la réception d'une trame descendante en provenance de l'OLT (110), et l'obtention d'un temps de réception d'un bit prédéterminé de la trame descendante ;

c) la réception d'un signal optique montant provenant d'un premier nœud de réseau (120, 221) couplé de manière communicative à la première ONU (130c) et au premier nombre d'ONU (130a, 130b, 130d), et la détection d'une enveloppe du signal optique montant, le signal optique montant comprenant des signaux en rafale transmis par le premier nombre d'ONU (130a, 130b, 130d) en réponse à la trame descendante sur, respectivement, l'intervalle de temps qui leur est affecté ;

d) la détermination d'une position temporelle de l'au moins un intervalle de temps prédéterminé qui n'est pas utilisé par le premier nombre d'ONU (130a, 130b, 130d) dans une trame montante sur la base de l'enveloppe du signal optique montant ;

e) la détermination d'un premier délai d'égalisation sur la base de l'enveloppe du signal optique montant, du temps de réception d'un bit prédéterminé de la trame descendante et des informations concernant l'au moins une du premier nombre d'ONU (130a) ;

f) la transmission d'un premier signal à l'OLT (110) en utilisant l'au moins un intervalle de temps prédéterminé basé sur le premier délai d'égalisation ;

où les informations concernant l'au moins une du premier nombre d'ONU (130a) comprennent un emplacement d'un intervalle de temps qui est affecté à l'au moins une du premier nombre d'ONU (130a) dans une trame montante, un délai d'égalisation, un temps de réponse exact et un temps de début pour l'au moins une du premier nombre d'ONU (130a), et les distances entre le premier nœud de réseau (120, 221) et l'au moins une du premier nombre d'ONU (130a).

5. Procédé selon la revendication 4, dans lequel, l'étape e) comprend en outre :

e1) la détermination, respectivement, d'un délai entre le temps de réception du bit prédéterminé de la trame descendante et le temps de départ du signal en rafale transmis par l'au moins une du premier nombre d'ONU (130a);

e2) la détermination d'une distance entre la première ONU (130c) et le premier nœud de réseau (120, 221) sur la base du délai et des informations concernant l'au moins une du premier nombre d'ONU (130a) ;

e3) la détermination du premier délai d'égalisation sur la base de la position temporelle de l'au moins un intervalle de temps prédéterminé et de la distance entre la première ONU (130c) et le premier nœud de réseau (120, 221).

6. Procédé selon la revendication 4, dans lequel le premier signal est un message d'opération, d'administration et de maintenance de couche physique, PLOAM.

7. Procédé selon la revendication 4, dans lequel une longueur d'onde d'un signal descendant est différente de celle d'une salve montante.

8. Procédé dans un terminal de ligne optique, OLT (110), destiné à aider une première unité de réseau optique, ONU (130c), à démarrer une communication avec l'OLT (110), l'OLT (110) étant couplé de manière communicative à la première ONU (130c) qui n'est pas encore en service et à un premier nombre d'ONU (130a, 130b, 130d) qui sont déjà en service, où le premier nombre est un nombre naturel ;

le procédé comprenant :

a) l'affectation à chacune du premier nombre d'ONU (130a, 130b, 130d) d'un intervalle de temps dans une trame montante pour transmettre une salve montante à l'OLT (110), tout en laissant au moins un intervalle de temps prédéterminé dans la trame montante non affectée à aucune du premier nombre d'ONU (130a, 130b, 130d) ;

b) la transmission d'informations concernant au moins une du premier nombre d'ONU (130a) à la première ONU (130c) qui n'est pas encore en service ;

c) la transmission de trames descendantes à la première ONU (130c) et au premier nombre d'ONU (130a, 130b, 130d) ;

d) la réception d'un premier signal depuis la première ONU (130c) sur l'au moins un intervalle de temps prédéterminé qui n'est pas affecté à l'une quelconque du premier nombre d'ONU (130a, 130b, 130d) ;

e) la détermination des paramètres qui sont nécessaires pour établir la communication avec la première ONU (130c) ;

où les informations concernant l'au moins une du premier nombre d'ONU (130a) comprennent un emplacement d'un intervalle de temps qui est affecté à l'au moins une du premier nombre d'ONU (130a) dans une trame montante, un délai d'égalisation, un temps de réponse exact et un temps de démarrage exact pour l'au moins une du premier nombre d'ONU (130a), et des distances entre un premier nœud de réseau (120, 221) et l'au moins une du premier nombre d'ONU (130a), ledit premier nœud de réseau (120, 221) étant couplé de manière communicative à l'OLT (110), à la première ONU (130c) et au premier nombre d'ONU (130a, 130b, 130d).

**9.** Procédé selon la revendication 8, comprenant en outre :

- la réception d'un signal optique montant comprenant des signaux en rafale transmis par le premier nombre d'ONU (130a, 130b, 130d) en réponse à une trame descendante sur, respectivement, l'intervalle de temps qui leur est affecté ;
- la fourniture du signal optique montant à la première ONU (130c) qui n'est pas encore en service.

**10.** Procédé selon la revendication 8, dans lequel, l'au moins un intervalle de temps prédéterminé est suffisamment long pour accueillir la première ONU (130c).

**11.** Première unité de réseau optique, ONU (130c), étant couplée de manière communicative à un terminal de ligne optique, OLT (110), l'OLT (110) étant en outre couplé de manière communicative à un premier nombre d'ONU (130a, 130b, 130d) qui sont déjà en service, le premier nombre étant un nombre naturel, chacune du premier nombre d'ONU (130a, 130b, 130d) étant affectée à un intervalle de temps dans une trame montante pour transmettre une slave montante à l'OLT (110), au moins un intervalle de temps prédéterminé dans la trame montante n'étant pas affecté l'une quelconque du premier nombre d'ONU (130a, 130b, 130d) ; la première ONU (130c) comprenant :

un récepteur aval (510), configuré pour :
recevoir des informations concernant au moins une du premier nombre d'ONU (130a) depuis l'OLT (110) ; et
recevoir une trame descendante depuis l'OLT (110) ;
un récepteur amont (520), configuré pour :

recevoir un signal optique montant depuis un premier nœud de réseau (120, 221) couplé de manière communicative à la première ONU (130c) et au premier nombre d'ONU (130a, 130b, 130d) et configuré pour recevoir ledit signal optique montant comprenant des signaux en rafale transmis par le premier nombre d'ONU (130a, 130b, 130d) en réponse à la trame descendante sur, respectivement, l'intervalle de temps qui leur est affecté, et pour fournir le signal optique montant à la première ONU (130c), et pour détecter une enveloppe du signal optique montant ;

une unité de détermination (540), configurée pour :

déterminer une position temporelle de l'au moins un intervalle de temps prédéterminé qui n'est pas utilisé par le premier nombre d'ONU (130a, 130b, 130d) dans une trame montante sur la base de l'enveloppe du signal optique montant ; et
déterminer un premier délai d'égalisation sur la base de l'enveloppe du signal optique montant, d'un temps de réception d'un bit prédéterminé de la trame descendante et des informations concernant l'au moins une du premier nombre d'ONU (130a) ;

un émetteur amont (530), configuré pour :

transmettre un premier signal à l'OLT (110) en utilisant l'au moins un intervalle de temps prédéterminé basé sur le premier délai d'égalisation ; où les informations concernant l'au moins une du premier nombre d'ONU (130a) comprennent un emplacement d'un intervalle de temps qui est affecté à l'au moins une du premier nombre d'ONU (130a) dans une trame montante, un délai d'égalisation, un temps de réponse exact et un temps de démarrage pour l'au moins une du premier nombre d'ONU (130a), et les distances entre le premier nœud de réseau (120, 221) et l'au moins une du premier nombre d'ONU (130a).

**12.** Première ONU (130c) selon la revendication 11, l'unité de détermination étant en outre configurée pour :

- déterminer, respectivement, un délai entre le temps de réception du bit prédéterminé de la trame descendante et le temps de départ du signal en rafale transmis par l'au moins une du premier nombre d'ONU (130a);
- déterminer une distance entre la première ONU (130c) et le premier nœud de réseau (120, 221) sur la base du délai et des informations concernant l'au moins une du premier nombre d'ONU (130a) ;
- déterminer le premier délai d'égalisation sur la base de la position temporelle de l'au moins un intervalle de temps prédéterminé et de la distance entre la première ONU (130c) et le premier nœud de réseau (120, 221) .

13. Terminal de ligne optique, OLT (110), étant couplé de manière communicative à une première unité de réseau optique, ONU (130c) qui n'est pas encore en service et à un premier nombre d'ONU (130a, 130b, 130d) qui sont déjà en service, où le premier nombre est un nombre naturel ;
l'OLT étant configuré pour :

a) affecter à chacune du premier nombre d'ONU (130a, 130b, 130d) d'un intervalle de temps dans une trame montante pour transmettre une salve montante à l'OLT (110), tout en laissant au moins un intervalle de temps prédéterminé dans la trame montante non affectée à aucune du premier nombre d'ONU (130a, 130b, 130d) ;
b) transmettre des informations concernant au moins une du premier nombre d'ONU (130a) à la première ONU (130c) qui n'est pas encore en service ;
c) transmettre des trames descendantes à la première ONU (130c) et au premier nombre d'ONU (130a, 130b, 130d) ;
d) recevoir un premier signal depuis la première ONU (130c) sur l'au moins un intervalle de temps prédéterminé qui n'est pas affecté à l'une quelconque du premier nombre d'ONU (130a, 130b, 130d) ; et
e) déterminer les paramètres qui sont nécessaires pour établir la communication avec la première ONU (130c) ;

où les informations concernant l'au moins une du premier nombre d'ONU (130a) comprennent un emplacement d'un intervalle de temps qui est affecté à l'au moins une du premier nombre d'ONU (130a) dans une trame montante, un délai d'égalisation, un temps de réponse exact et un temps de démarrage exact pour l'au moins une du premier nombre d'ONU (130a), et des distances entre un premier nœud de réseau (120, 221) et l'au moins une du premier nombre d'ONU (130a), ledit premier nœud de réseau (120, 221) étant couplé de manière communicative à l'OLT (110), à la première ONU (130c) et au premier nombre d'ONU (130a, 130b, 130d).

100

130a

130b

140

130c

110

130d

120

Fig. 1

200

230a

230b

240

222b

230c

210

230d

221

222a

Fig. 2

Fig. 3

Start of DS PHY frame
in OLT's view

Start of US PHY PLOAM message for
activation and ranging

| PSBd | PHY frame content | PSBd | PHY frame content | PSBd | PHY frame content | PSBd | PHY frame content |

OLT

Tsend, N

h/c_us
h/c_us
h/c_us

PHY burst content
PHY burst content
PHY burst content
PHY burst content

PS

xi/c_us

ONUi

T_dn,i    RspTime,i    EqDi,i    StartTime    T_up,i

xi/c_us
xk/c_us

ONUj

T_dn,j    RspTime,j    EqDi,j

xi/c_us

Trec,N,k

ONUk

T_dn,k    RspTime,k    StDi,k = ???    Δt_ONUi    Δt_ONUj    Δt_ONUl

ONUl

T_dn,l    RspTime,l    EqDi,l    StartTime    T_up,l

Start of DS PHY frame
in ONU's view

Start of US PHY frame
in ONU's view

Fig. 4

20

Fig. 5

Fig. 6

| Threshold Position | ONU 130a | ONU 130b | ONU 130c | ONU 130d |
|---|---|---|---|---|
| f | 0 | 0 | 0 | 1 |
| e | 0 | 0 | 0 | 1 |
| d | 1 | 0 | 0 | 1 |
| c | 1 | 1 | 0 | 1 |
| b | 1 | 1 | 0 | 1 |
| a | 1 | 1 | 0 | 1 |
| sum | 4 | 3 | 0 | 6 |

Fig. 7